# EUROPEAN PATENT SPECIFICATION

(11) **EP 1 350 428 B1**
(45) Date of publication and mention of the grant of the patent: **29.09.2004**
(21) Application number: 01999271.8
(22) Date of filing: 05.12.2001
(51) Int. Cl.: A01G 3/037, B26B 15/00

(54) **PORTABLE, MOTOR-POWERED SHEARS**
TRAGBARE SCHERE MIT MOTORANTRIEB
SECATEUR PORTATIF A MOTEUR

(30) Priority: 05.12.2000 ES 200003065; 25.10.2001 ES 200102609 U
(43) Date of publication of application: 08.10.2003
(73) Proprietor: Hispaes, S.A., 08182 Sant Feliu de Codines (ES)
(72) Inventor: GURRI MOLINS, José, E-08182 Sant Feliu de Codines (ES)
(74) Representative: Gislon, Gabriele
(86) International application number: PCT/ES2001/000476
(87) International publication number: WO 2002/045479

(56) References cited:
- DE-A1- 3 524 443
- DE-C- 520 144
- DE-U- 29 812 942
- ES-A6- 2 000 507
- FR-A1- 2 770 372

## Description

### Field of the invention

This invention relates to a portable motor-driven scissor applicable to constitute a tool for pruning in agricultural works, provided with two exchangeable jaws, both provided with motion in opposite senses from a open position to a closed position and vice versa, which allows the scissor has a very lightweight and compact design.

### Prior art

Different devices of portable scissor are known in the prior art, driven by an battery-powered electric motor either integrated in the scissor itself or, more generally, carried by the operator thereof, the scissor being provided with a handle which allows that it can be used with a single hand.

In this line, EP 0 291 431 discloses a portable electric tool, such as a plate shears or scissor for pruning comprising a moving working part, such as a bit, arranged at a front end of an empty body, a part thereof forms a handle of the said tool. Within the said empty body are arranged an electric motor and a speed reducer the outlet of which is associated to the said moving working part by means of a transmission system comprising a moving driving part. The tool comprises a trigger accessible from outside the said body and an electrical control device driven by the said trigger. As well the trigger as the electrical control device are controlled by the moving driving part of the moving working part the displacements of which they follow and they may adopt different relative positions. In this cutting electrical tool, only one of the jaws is provided with motion, while the other is fixed on the supporting body. This has, on one hand, the drawback that it provides an asymmetric cut which is little neat, and that in the case of pruning the fixed jaw or dolly tends to crush the branch damaging it. On the other hand, the moving jaw needs to move between the open and closed positions and therefore its driving requires a relatively big and heavy mechanism which is very bulky very close to the cutting area, which is also a drawback. Driving, in addition, is carried out by means of a worm device having a low mechanical efficiency, so part of the motor power is missed which means a relatively high energy consumption which is adverse in the case that the tool is fed by batteries having a limited load and carried by the user.

DE 34 46 802 discloses another of the said motor-driven tools specially dedicated to act as a shear, in which only one of the two jaws is provided with motion while the other is fixed. This model shows approximately same drawbacks as those above discussed.

DE 35 24 443 discloses a scissor provided with two jaws of which only one is provided with motion while the other is fixed. In this model, the moving jaw is hinged with respect to an axis and shows a lever arm on the side opposite to the cutting area with respect to the said hinge axis , the said lever arm being ended by a sector of gear wheel which interlocks with a pinion of a gear reducer drive connected to an electric motor. Gear between the gear wheel and the pinion is a cylindrical gear having parallel axis. This makes that the diameter of the pinion is added to the radius of the circular sector lengthwise the scissor, bringing the motor far apart the cutting area arid providing a significantly long tool. In addition, the said gear reducer drive includes other cylindrical and conical steps, which are even more bulky and add even more weigh to the area between the motor and the jaws, which constitutes a serious drawback. Also in this case, the fact it has a moving sheet which is applied against another fixed sheet as a dolly, provides an asymmetric cut which, when the scissor is used, for example, for pruning trees, it has to chop off the cutting area of the part of the branch which is joined to the tree, which causes a serious prejudice.

Utility model ES 1006938 discloses a motor-driven and self-powered scissor in which both jaws are provided with a symmetric motion. The said jaws are associated to a device having bent levers forming a hinged quadrilateral with a vertex at the hinge point of the jaws, fixed to the frame, and a movable opposite vertex driven by an endless screw mechanism. This device has a very important length and is enclosed within an elastic shell such as a corrugated rubber sleeve, which is deformed by gradually be widened as the jaws are approaching to their closed position by the effect of the bent levers deployment until reaching a level of protrusion hindering the access to parts of a tree in the case of pruning, which in addition could even be dangerous for the operator in narrow enclosures. In addition this mechanism does not provide an even closing speed but the speed is reduced as the jaws are closing.

### Explanation of the invention

This invention seeks to provide a motor-driven scissor which overcomes above discussed drawbacks by providing two moving jaws, with symmetric displacements, driven by a small-sized lightweight mechanism which has a high mechanic efficiency in order to optimize the energy consumed and with it extend the operational time of batteries load in the event they are used.

For this, this invention provides a portable motor-driven scissor of the kind which comprises a support associated to a power takeoff from a motor, and a cutting mouth comprising two jaws, at least one of which is a working cutting jaw rotatably mounted on the said support and kinetically connected to the output of the said power takeoff by means of a gear drive to carry out a closing-opening motion with respect to the other jaw. The said support includes or has fastened a handle to which are associated means for controlling the tool operation. The said working cutting jaw, which is at least one, is fastened to a part for power drive which may rotate about an axis mounted on a support, the said power drive part includes a lever arm at the end of which is arranged a sector of crown wheel which interlocks with a pinion joined to an axis of the said power takeoff constituting the said gear drive.

An essential and differentiating characteristic of the scissor of this invention is that the said spin axis of the power drive part forms a predetermined angle with respect to the said pinion spin axis. Preferably, the spin axis of the power drive part joins the pinion spin axis and the said predetermined angle is a straight angle. According to an example of embodiment most preferred, the gear between the pinion and the said gear wheel sector is an external conical gear of axis crossing themselves at straight angle.

According to an example of embodiment, only one jaw is a working jaw while the other is fixed on the support. This single working jaw is driven by the conical gear above disclosed. According to another example of embodiment, both jaws are working jaws and each of them is fixed to a respective power drive part hinged with respect to the said axis, which is common for both. Each of the power drive parts includes one of the said lever arms with a respective sector of crown wheel which interlocks with areas diametrally opposite to the said pinion, so that, when rotating the said pinion, both power drive parts and the respective jaws rotate a same angle in opposite directions with respect to the said axis, each running half the travel of the said closing-opening motion.

This arrangement has the advantage that the diameter of the pinion is not added to the radius of the sector of the gear wheel in the scissor lengthwise direction, a more compact design being achieved. In addition, by means of the example of embodiment in which both jaws are working jaws, a more even and smooth cutting action is achieved as both jaws are closing symmetrically on the object to be cut.

According to an example of embodiment of a double working jaw, the portable motor-driven scissor comprises a supporting body and a pair of jaws fixed to respective power drive parts. Both power drive parts with their respective jaws incorporated, are hinged and may rotate about a common axis with respect to the said supporting body. From the said power drive parts lever arms are deriving, located on sides opposite to the cutting mouth with respect to the said spin axis. The said lever arms carry the respective sectors of gear wheel which interlocks with areas diametrally opposite to a same pinion constituting a gear drive arranged at the output of a speed reducer connected to a driving electric motor.

Advantageously, the gear between the pinion and the said gear wheel sectors is an external conical gear, so that the diameter of the pinion is not added tot he radius of the gear wheel sectors of the jaws in the scissor lengthwise direction , but the pinion remains interposed between the said lever arms carrying the sectors of gear wheel. In addition, as the angular displacements of the lever arms are only half the wideness between the positions open and closed of the haws, this drive can be substantially included in a cylinder having a diameter comparable to the diameter of the motor group with a planetary reducer coupled to it. On the other hand, the conical gear jointly with the planetary reducer has a very high mechanical efficiency which optimizes to the maximum the motor power and the energy consumption, which allows more operational time with a same battery load. The scissor can incorporate jaws having edges shaped so that it allows to optimize the motor power.

In the example of embodiment provided with single working jaw, the support of the portable scissor is of a single part and comprises a portion for coupling to the power takeoff and a side arm forwardly extended on which are mounted two jaws, a working jaw and a fixed jaw, forming the cutting mouth. On the support, a recess is foreseen for the pinion or the conical gear for the working jaw drive.

The motor is coupled to a reducer the output of which constitutes the said power takeoff, and are provided with means for fastening the motor and reducer group to the said support coupling portion. On one of the internal faces of the said supporting side arm, the fixed jaw is locked and adjacent to this is mounted the working jaw. In the said coupling portion, there exists a passageway through which a conical pinion fixed to the power takeoff axis passes up to an area of the arm adjacent to the coupling portion where is located a recess which provides, at leat partly, a space for the conical pinion where this later interlocks with the sector of crown wheel arranged in the power drive part associated to the working jaw.
The example of embodiment of a single working jaw takes profit of the advantages from using a conical gear having simpler mechanisms which means cutting down the production cost and the fact that it is mounted on a support provided with a side arm makes that the said mechanisms are more accessible, providing a greater easiness for mounting, dismounting and servicing.

As well in the example of embodiment with double working jaw as for single working jaw, the rotation of the pinion is guided and supported by a radial bearer which is externally seated on a cylindrical area of the support, and the rotation of each working jaw is guided and supported by a radial bearer and by an axial bearer. In the event of the double moving jaw , a single axial bearer is interposed between both jaws. The radial bearers are preferably simple ball bearers and the axial bearer is preferably a needle bearer and to prevent that dirtiness enters between both jaws up to the axial bearer area, the tool includes an elastic annular sealing element, such as a O-ring, trapped between the fixed and working jaws and surrounding the said axial bearer.

Optionally, arranged on the bottom of an offset housing the axial bearer there is several adjusting washers, of metallic or synthetic material, of one or several thicknesses which together with a given pre-load of axis tightening, adjust the closing-opening motion of the working jaw.

The tool of this invention comprises a housing fixed to the support which incorporates a handle and controlling means associated to it. The controlling means are located so that they may be driven with the fingers of the same handle which grasps the handle and include at least a driving push-button of the said motor for controlling a closing-opening motion of the working jaw with respect to the fixed jaw and at least a control associated to a safety device.

The tool optionally includes an overload electronic control which when detecting an intensity of current higher than a preestablished threshold, stops the closing-opening cycle of the working jaw and brings it back to an open position,

When both jaws are working jaws, they can be two bits or one bit and a dolly. When only one jaw is a working jaw, it is preferably a bit and the fixed jaw is a dolly, although it could be the contrary or that the working jaw and the fixed jaw are both bits.

### Short explanation of the drawings

These and other advantages will be apparent from following detailed description of examples of embodiment with reference to the drawings appended in which:
Fig. 1 is a view in perspective, exploded, of a head of a motor-driven scissor according to this invention;
Fig. 2 is a view in perspective of the head of Fig. 1, assembled;
Fig. 3 and 4 are side elevation views and plan view, respectively, of the head of Fig. 2;
Fig. 5 is a central lengthwise sectional view of the head of Fig. 3 with an enlarged detail;
Fig. 6a y 6b are plan view of a variation of the head of Fig. 2 with a model of jaws in open and closed positions, respectively;
Fig. 7a and 7b are plan views of same variation of Fig. 6a and 6b with another model of jaws in open and closed positions, respectively;
Fig. 8 is a right side elevation view of the portable motor driven scissor in which the stroke lines indicate the profile of the housing configuring the handle:
Fig. 9 is a left side elevation view with the stroke lines indicating the profile of the said housing configuring the handle;
Fig. 10 is a top view taken in the direction of arrow X of Fig. 9 in which the stroke lines indicate the profile of the housing;
Fig. 11 is an enlarged view in lengthwise section taken by a medium plane perpendicular to the cutting plane;
Fig. 12 is an enlarged cross sectional view taken by plane XII-XII of Fig. 8; and
Fig. 13 is a view in perspective of the support of Fig. 1 to 5.

### Detailed description of examples of preferred embodiments

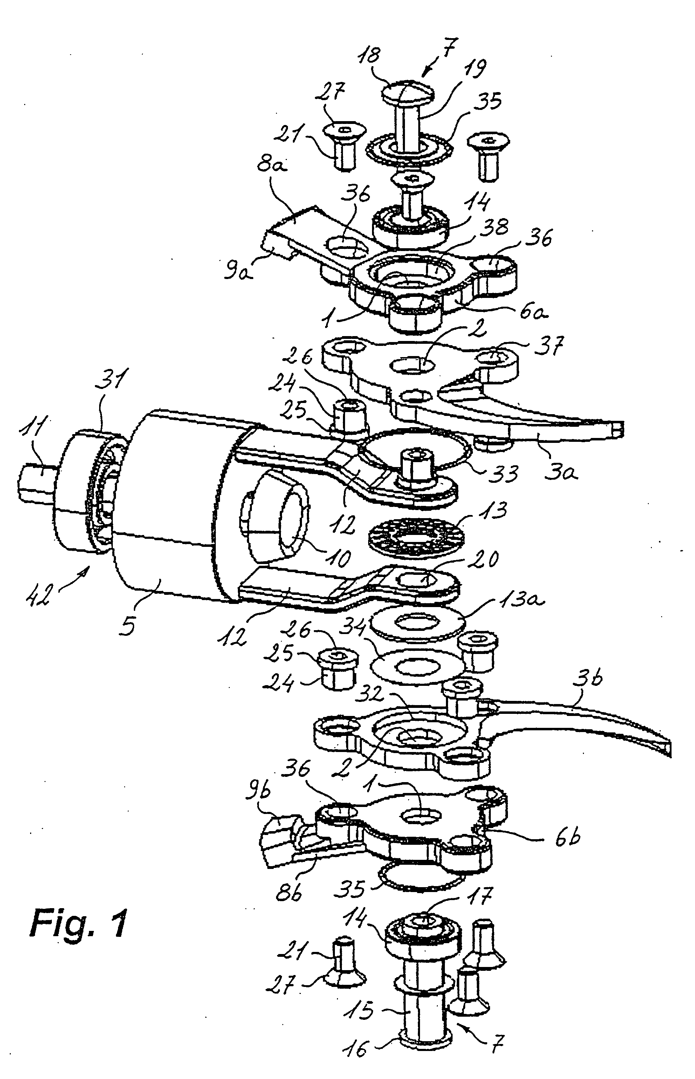

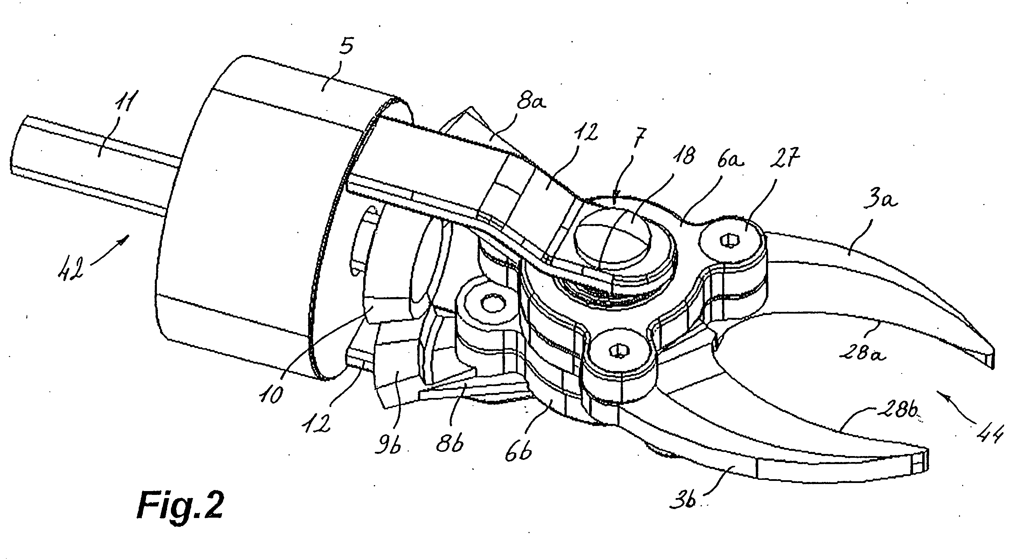

Referring initially to Fig. 1-5, the portable motor-driven scissor of this invention comprises, according to an example of embodiment, a head essentially formed by a support 1 which supports a pair of moving jaws, which incorporate jaws 3a, 3b. Although the said jaws could be integral with the said jaws, it is preferred that the said jaws are formed, as it is best shown in Fig. 1 by power drive parts 6a, 6b on which are fixed jaws 3a, 3b, which are independent and can adopt different configurations, anchoring means being provided for locking jaws 3a, 3b on respective power drive parts 6a, 6b. Both jaws, formed by the power drive parts 6a, 6b with jaws 3a, 3b incorporated, are hinged and may rotate about an axis 6 common with respect to support 1 and the power drive parts derive, on opposite sides of the cutting area respect to the said axis 7, respective lever arms 8a, 8b carrying the gear wheel sectors 9a, 9b which interlock with diametrally opposite areas of a same pinion 10 pertaining to a gear drive at the output of a speed reducer 84 connected to an electric motor 73 (not shown). Preferably, the spin axis of pinion 10 orthogonally cuts the spin axis 7 of the jaws and respective jaws 3a, 3b and levers 8a, 9a; 8b, 9b. With this arrangement, when rotating the said pinion 10, both jaws and the respective jaws 3a, 3b rotate with respect to the said axis 7 a same angle in opposite directions, each making half the travel between an open position and a closed position and vice versa. The scissor includes controlling means of the said motor 73 for displacing the hinged jaws between an open position and a closed position and vice versa, the assembly being housed in a housing which incorporates a handle provided with a controlling trigger (not shown).

Advantageously, the said speed reducer 84 is a reducer having planetary gears with their entering shaft coaxial to its exiting shaft and to the spin axis 10 and the gear between the pinion 10 and the said gear wheel sector 9a, 9b is an external conic gear, so that the diameter of the pinion 10 is not added to the radius of the sectors of the gear wheel 9a, 9b of the jaws lengthwise the scissor. This, together with the fact that each jaw only makes half the total travel, allows that the design is extremely compact and lightweight as well in width as in length, of the head of the portable motor-driven scissor of this invention.

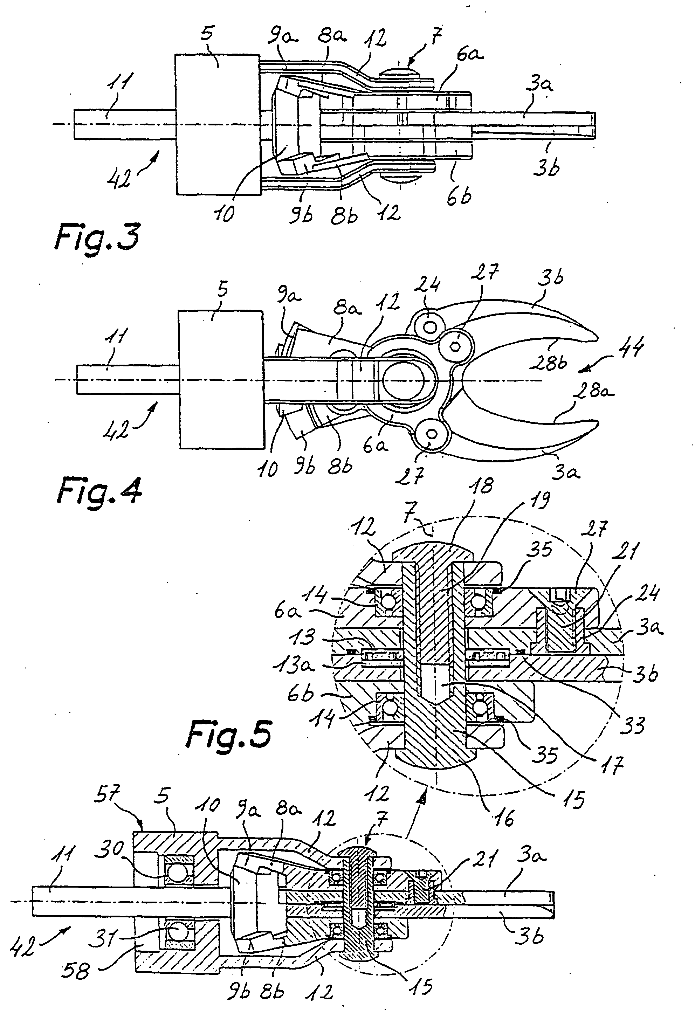

For mounting them, as well the power drive parts 6a, 6b as the jaws 3a, 3b comprise respective passing holes 1, 2 coaxial to each other, for axis 7 and mentioned means for anchoring jaws 3a, 3b to the power drive parts 6a, 6b comprise at least a fastening point in addition to the said passing holes 1,2 for the axis 7. Preferably, the scissor of the invention includes at least two and more preferably three of the said anchoring points angularly distributed about the passing holes 1, 2 for axis 7. As it can be best see from details on Fig. 5, each of the said anchoring points comprises an externally cylindric centring socket 24, passed through respective holes 36, 37, coaxial to each other, of the power drive part 6a, 6b and the jaw 3a, 3b, the said centring socket 24 being provided with a head 25 which is housed in an external offset of jaws 3a, 3b and a central threaded hole 26 in which a screw 21 provided with a head 27 is screwed, which remains housed in an external offset of the power drive part 6a, 6b without protruding from the external surface thereof. Although the presence of the centring socket 24 provides a very accurate centring of the jaws 3a, 3b with respect to the power drive parts 6a, 6b at same time it protects the screw thread 21 in the event both parts slide, a simpler mounting would also be possible in which the screws 21 will be directly screwed in threaded holes of the power drive part.

The pinion 10 is mounted on a shaft 11 supported by a bearing 31 housed in an offset 30 of the said support 1 from a end of which frontally protrudes a fork 12 supporting spin axis 7 of the power drive parts 6a, 6b and respective jaws 3a, 3b, the said fork 12 comprising two arms located on sides diametrally opposite of the pinion 10, including it. On the other end of the support 1, motor 73-reducer 84 are mounted (not shown). Between both arms of the fork 12 are trapped two power drive parts 6a, 6b with respective jaws 3a, 3b fastened to them, both jaws 3a, 3b being leaning against each other, trapping an axial bearing 13 half housed in respective offsets 32 of the jaws 3a, 3b and axially pressing an O-ring 33 closing the perimeters of the said offsets. Preferably, the said axial bearing 13 is a needle bearing using as thread track the bottoms of the said offsets 32. However, on the bottom of at least one of the said offsets 32 at least one adjusting washer 34 can be housed to offset possible height differences, in which case it is necessary to have additionally available a supporting washer 13a for the bearing 13. Obviously, the said bearing 13 could be suppressed in a simplified embodiment.

Although it is not strictly necessary, the scissor of this invention comprises respective bearings 14 housed in offsets 38 of the external faces of the power drive parts 6a, 6b, the said bearing being protected by O-rings 35 axially pressed down by covers or enlarged ends of the fork 12 arms at which ends are located holes 20 for the axis 7 which crosses throughout the power drive parts 6a, 6b and respective jaws 3a, 3b. The figures illustrate the bearings 14 as radial ball bearings, although they could also be another kind of bearings or friction socket.

As it is best shown in Fig. 5 to make its mounting and good operation easier, the axis 7 comprises a socket 15 provided with a head 16 and a cylindric end surface 11 on which are internally adjusted the said holes 20 of the fork 12 arms and the bearings 14 and a threaded central hole 17, the head of which 16 in operating position, is stopped by the external face of one of the fork 12 arms, while a head 18 of a screw 19 threaded in the said central hole 17 is stopped against the external face of the other fork 12 arm.

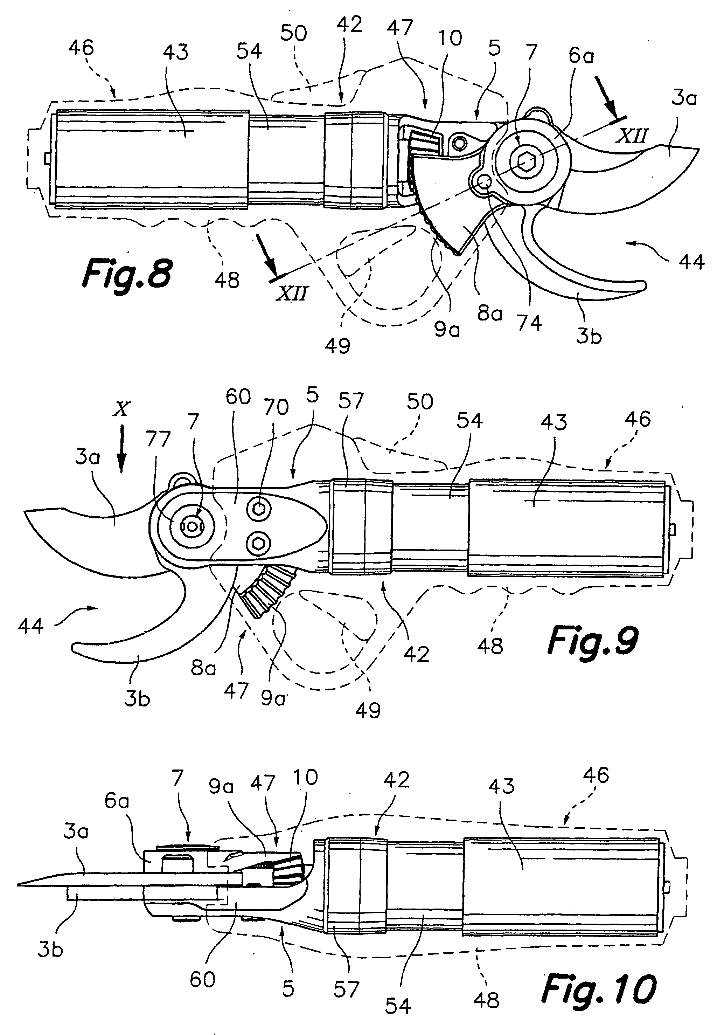

Referring now to Fig. 8, 9 and 10, the portable motor-driven scissor of this invention comprises, according to another example of embodiment, a support 5 associated to a power takeoff 42 from a motor 43 and a cutting mouth 44 comprising two cutting jaws 3a, 3b, one of which is a working cutting jaw 3a, mounted so that it rotates on the said support 5 and connected to the output of the said power takeoff 42 by means of a conical gear 47 for performing a closing-opening motion with respect to the other jaw 3b which is fixed. The said support 5 includes or has fixed a housing 46 (shown by means of stroke line in the figures) which defines a handle 48 to which are associated means 49, 50 controlling the tool. The said motor 43 is coupled to a reducer 54 provided with one output cylindric end from which is protruding an axis 11, constituting the power takeoff 42.

Although the example of embodiment with double working jaw illustrated in Fig. 1 to 7b are shown without motor and handle, the arrangement of motor 43, reducer 54, housing 54, handle 48 etc. could be applied to it, which is disclosed referring to the example of embodiment of a single working jaw illustrated in Fig. 8 to 13.

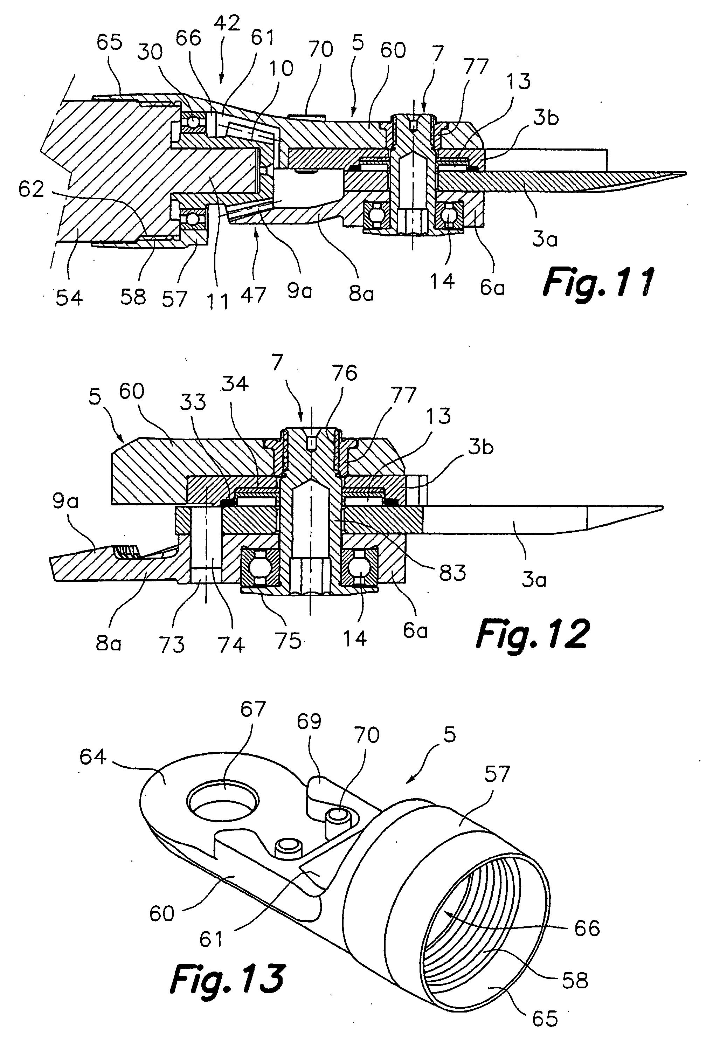

The said support 5 which is shown separately in Fig. 13 is of a single piece and comprises a coupling portion 57 to the power takeoff 42 and a side arm 60 forwardly extended on which is mounted the cutting mouth 44 and the mechanism for controlling it.

The said coupling portion 57 is substantially cylindric and comprises a glass-shaped end hollow area 65 within which is arranged a first fastening configuration having the shape of an internal thread 58 which is fastened in a second fastening configuration having the shape of an external thread 62, interconnected, arranged at the said cylindric output end of the reducer 54.

On an internal face 64 of the said arm 60 is locked the fixed jaw 3b, and adjacent to this is mounted the working jaw 3a. Through the coupling portion 57 there exists a passageway 66 for passing conical pinion 10 fixed to the said axis 11 of the power takeoff 42 until a space located in front of an area were the arm 60 starts, where the said conical pinion 10 interlocks with a sector of crown wheel 9 interconnected integral with the working jaw 5. The said pinion 10 and crown 9 constitute a conical gear 47, preferably having a straight dentate and axis orthogonally crossing. As it is shown in Fig. 11, in an internal area of the passageway 66 of the coupling portion 57 an external seat is defined for a radial bearing 30 which is internally seated on a cylindric area of a conical pinion hub 10. Thanks to it, the stresses radially the axis 11 are transmitted by the said bearing 30 to the support 5 preventing to damage the reducer 54 output internal bearing. The radial bearing 30 is preferably a simple ball bearing.

As it is best shown in Fig. 13, the internal face 64 of the arm 60 has a flat end area, having a circular outline, in which centre there is a hole 67 for mounting an axis which, as disclosed in details below, passes through the fixed jaw 3b and acts as a guide for the rotating motion of the working jaw 3a. At a medium area of the internal face 64 are provided protrusions 69 for fastening on the sides the fixed jaw 3b, the said protrusions 69 have a height substantially equal to the thickness of the fixed jaw 3b. In the example illustrated, in an area located between the said protrusions 69, there exists two holes for screws 70 to fasten the fixed jaw 3b, although at least one would be sufficient. In an area of the arm 60 adjacent to the coupling portion 57 there is arranged a recess 61 which provides at leat part of the said space for the conical pinion 10, where it interlocks with the said crown wheel sector 9a.

To transmit the gear 47 force to the working jaw 3a, the tool comprises a power drive part 6 provided with a portion substantially circular leaning against the external face of the working jaw 3a and crossed by its central area by the said axis 7. From the said substantially circular portion protrudes a lever arm 8a at which end the dentate of the said crown wheel 9a. At this force drive part 6 a hole 73 is provided (see Fig. 12) which remains facing a corresponding hole of the working jaw 3a for housing, between them, a driving pin 74. However, and depending on the requirements of design, two or more driving pins could be housed in corresponding pairs of holes facing each other located on the drive part 6a and the working jaw 3a.

The axis 7 consecutively crosses the power drive part 6a, the working jaw 3a, the fixed jaw 3b and the arm 60 of the support 5 acting as hinge axis of the assembly of force drive part 6 and working jaw 3a, as positioning pin of the fixed jaw 3b and as packing and fastening element of the assembly of arm 60 of the support 5. For this and as it is best shown in Fig. 12, the axis 7 comprises: at one end a head, wide and flat, trapping a radial bearing 14 housed in a recess of an external face of the force drive part 6; in a medium area of a cylindric section 83 on which the assembly of the force drive part 6a and working jaw 3a rotates and which acts as positioning pin for the fixed jaw 3b; and on the opposite end, a threaded area 76 which is fixed to a nut 77 which remains embedded in an external face of the arm 60 of the support 5. Between the working and fixed jaws 3a and 3b, an axial bearing 13 is arranged which remains housed in a recess of the fixed jaw 3b. The said axial bearing 13 is protected from dirtiness by an annular sealing element 33, such as an elastic O-ring, trapped between the working and fixed jaws 3a and 3b surrounding the said axial bearing 13.

In the example of embodiment illustrated, the said radial bearing 14 is a simple ball bearing and the axial bearing 13 is a needle bearing. The adjustment of the closing and opening motion of the working jaw 3a with respect to the fixed jaw 3b is carried out by means of one or several adjusting washers 34 arranged on the bottom of the said recess of the fixed jaw 3b which houses the axial bearing 13 in combination with a given preload of the axis 7 tightening by means of its threaded area 76. The said adjusting washers 34 can be of metallic or synthetic material and when there is more than one, they can all be of same thickness or of different thicknesses.

The housing 46, shown by stroke lines in Fig. 8 to 10 and to which it has been referred to at the beginning of this description is preferably fixed to the support 5, although they could form an integral part thereof. The housing 46 incorporates the said handle 48 and the said controlling means 49, 50, which typically include a push-button 49 for driving the said motor 43 and a control 50 associated to a safety device. Each time the said push-button 49 is pushed, it starts a sequence of motions of the motor 43 which results in quick closing-opening motion of the working jaw 3a with respect to the fixed jaw 3b. The portable scissor of this invention also optionally includes an overload electronic control which, when detecting an intensity of the current higher than a preestablished threshold, stops the closing-opening cycle of the working jaw 3a and takes it back to an open position.

Although in the example of embodiment illustrated in the figures, the said working jaw 3a is actually a jaw and the said fixed jaw 3b is actually a dolly, the reversed arrangement could be possible or an arrangement in which the working jaw 3a and the said fixed jaw 3b are bits, depending on the application wished.

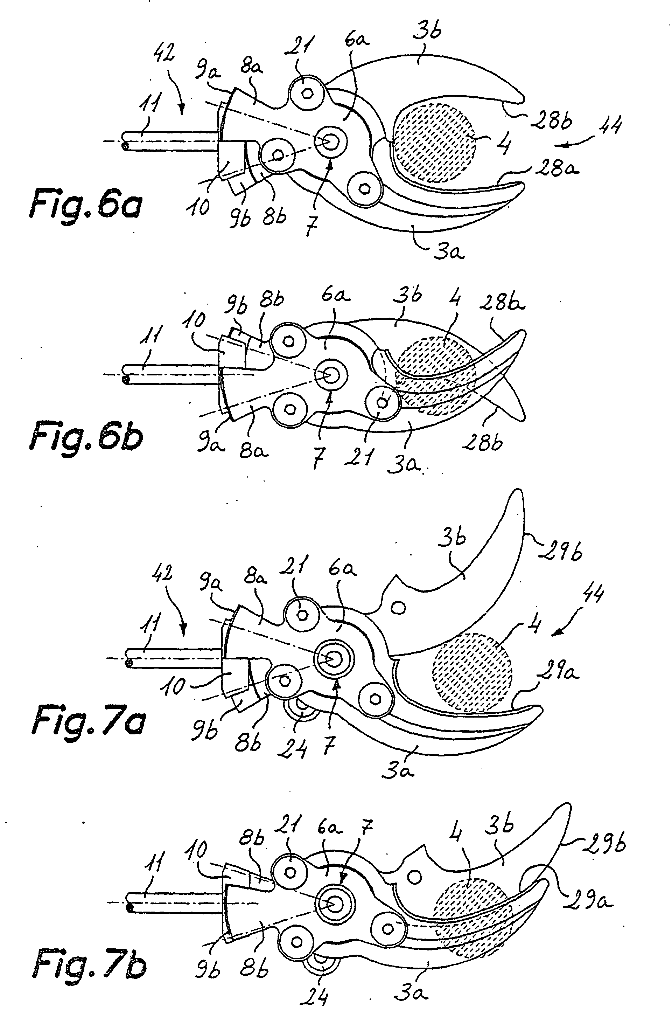

The characteristics of operation of the motor-driven scissor of this invention, common for all the examples of embodiment, are shown with reference to Fig. 6a, 6b; and 7a, 7b, in which the head illustrated is analogous in everything to that shown in Fig. 1-5 except in a different distribution of the points anchoring the jaws 3a, 3b to the power drive parts 6a, 6b around axis 7.

Referring now concretely to Fig. 6a, 6b, the head shows a variation for the two jaws 3a, 3b which have respective concave edge 28a, 28b, the said concavities, in operation arrangement, remain facing each other and during the cutting operation they tends to trap the object to be cut 4 in a position as close as possible to the axis 7, optimizing thus the scissor lever arms and with it the consumption of energy for each cut, which contributes to extend the operational time for a same battery load. With this model of jaws, it is essential to have available a sensor system to control the motor 73 operation, for example the intensity of the current consumed by the motor 73. When the object to be cut 4 is too hard, that it does not allow the normal travel of the jaws 3a, 3b and the cut progression, the consumption of current by the motor 73 increases beyond a preestablished threshold, the consumption being detected by the sensor system which orders a current switch-off or reversing the rotation senses of the motor 73, which does not damage it nor the gear drives.

In Fig. 7a, 7b, the head of the scissor of the invention 9 is showing another variation for the two jaws 3a, 3b, where one of them has a concave edge 29a while the other has a convex edge 29b, so that, in an operating arrangement, the first shows its concavity facing the convexity of the second. This kind of edges makes that when the object to be cut 4, located on the bottom of the opening between the jaws 3a , 3b is too hard, it tends to outwardly slide until even being expelled, protecting the mechanism, although the referred system protecting by means of intensity sensors can still be used.

Another characteristic seeking to optimize the energy consumption consists on end of stroke sensors, typically sensors having Hall effect, which according to this invention carries out motor 73 switch-off during a predetermined period of time before the power drive parts 6a, 6b and respective jaws 3a, 3b reached their respective mechanical ends of stroke as a precaution against the displacements which are produced afterwards by inertia during the transitory stopping displacements. Thus, when reaching the end of stroke of closing the device, it does not reverses the motor 73 rotation sense when it is still rotating by inertia en opposite sense, which consumes a peak of energy, but that during the time the motor 73 rotates by inertia, the motor 73 is disconnected and is only connected in opposite sense when it is already stopped.

Last, it must be pointed out that the examples of embodiment disclosed and shown in the figures are for simple illustrative purpose which does not limit the scope of this invention which is defined in appended claims.

## Claims

1. Portable motor-driven scissor of the kind comprising a support (5) associated to a power takeoff (42) from a motor (43), a cutting mouth (44) comprising two jaws (3a, 3b), at least one of which is a working cutting jaw (3a) rotatably mounted on the said support (5) and connected to the output of the said power takeoff (42) by means of a gear drive (47) to carry out a closing-opening motion with respect to the other jaw (3b), the said support (5) includes or has fastened a handle (48) to which are associated means for controlling (49, 50) the tool, **characterized in that** the said working cutting jaw (3a), which is at least one, is fastened to a part for power drive (6a) which may rotate about an axis (7) mounted on a support (5), the said power drive part (6a) includes a lever arm (8a) at the end of which is arranged a sector of crown wheel (9a) which interlocks with a pinion (10) joined to an axis (11) of the said power takeoff (42) constituting the said gear drive (47), where the said spin axis (7) of the power drive part (6a) forms a predetermined angle with respect to the said pinion spin axis (11).

2. Scissor, according to claim 1, **characterized in that** both jaws (3a, 3b) are working jaws and each of them is fixed to a respective power drive part (6a, 6b) hinged with respect to the axis (7) , which is common for both power drive parts (6a, 6b), each of the power drive parts (6a, 6b) including one of the said lever arms (8a, 8b) with a respective sector of crown wheel (9a, 9b) which interlocks with areas diametrally opposite to the said pinion, so that, when rotating the said pinion (10), both power drive parts (6a, 6b) and the respective jaws (3a, 3b) rotate a same angle in opposite directions with respect to the said axis (7), each running half the travel of the said closing-opening motion.

3. Scissor, according to claim 2, **characterized in that** it comprises anchoring means for fixing each jaw (3a, 3b) on the respective power drive part (6a, 6b).

4. Scissor, according to claim 3, **characterized in that** as well the power drive parts (6a, 6b) as the jaws (3a, 3b) comprise respective passage holes (1, 2) coaxial to each other, for the axis (7) and the said anchoring means comprise at least an anchoring point in addition to the said passage holes (1, 2) for the axis (7).

5. Scissor according to claim 4, **characterized in that** it comprises three of the said anchoring points angularly distributed around the said passage holes (1,2) for the axis (7).

6. Scissor, according to claim 5, **characterized in that** each of the said anchoring points comprises an externally cylindric centring socket (24), passed through respective holes (36, 37), coaxial to each other, of the power drive part (6a, 6b) and the jaw (3a, 3b), the said centring socket (24) being provided with a head (25) which is housed in an external offset of jaw (3a, 3b) and a central threaded hole (26) in which a screw (21) provided with a head (27) is screwed, which remains housed in an external offset of the power drive part (6a, 6b) without protruding from the external surface thereof.

7. Scissor according to claim 2, **characterized in that** from one end of the said support (5) frontally protrudes a fork (12) for supporting the spin axis (7) of the power drive parts (6a, 6b) and respective jaws (3a, 3b), the said fork (12) comprising two arms located on sides diametrally opposite to the pinion (10), including it while the axis (11) on which the pinion (10) is mounted is supported by a bearing (31) housed in an offset (30) of the support (5).

8. Scissor, according to claim 7, **characterized in that** between both arms of the fork (12) are confined the two power drive parts (6a, 6b) with respective jaws (3a, 3b) fixed on them, the said jaws (3a, 3b) being leaning against each other, trapping an axial bearing (13) housed in at least an offset (32) existing in at least one of the jaws (3a, 3b) and axially pressing an annular element (33) sealing the perimeters of the said offsets.

9. Scissor, according to claim 8, **characterized in that** it comprises respective radial bearings (14) housed in offsets (38) of the external faces of the power drive parts (6a, 6b) the said bearings being protected by O-rings (35) axially pressed by covers or by ends of the fork arms (12) where are located the holes (20) for the axis (7) which crosses throughout the assembly.

10. Scissor, according to claim 8, **characterized in that** the said axis (7) comprises a socket (15) provided with a head (16) and an external cylindric surface on which are internally adjusted the said holes (20) of the fork (12) arms and the radial bearings (14) and a threaded central hole (17), the head of which (16) in operating position, is stopped by the external face of one of the fork (12) arms, while a head (18) of a screw (19) threaded in the said central hole (17) is stopped against the external face of the other fork (12) arm.

11. Scissor, according to claim 7, **characterized in that** the said support (5) comprises in an area opposite to the said fork (12) a coupling portion (57) provided with a first fastening configuration (58) for joining to a second fastening configuration (62) arranged in the power takeoff (42).

12. Scissor according to claim 1, **characterized in that** only one jaw (3a) is a working jaw while the other jaw (3b) is fixed on the said support (5) which is of a single piece and comprises a coupling portion (57) provided with a first fastening configuration (58) for joining to a second fastening configuration (62) arranged in the power takeoff (42) and a forwardly extended side arm (60), on an internal face (64) on which is fastened the fixed jaw (3b) and adjacent to this there is mounted the working jaw (3a) and there exists a passageway (66) through the said coupling portion (57) for the said conical pinion (10) passage to a space provided in front of an area from which the said arm (80) starts where the conical pinion (10) interlocks with the said crown wheel sector (9a) integral with the working jaw (3a).

13. Scissor, according to claim 12, **characterized in that** the said internal face (60) has a flat end area, having a circular outline, in which centre there is a mounting hole (67) of an axis (7) which passes through the fixed jaw (3b) and acts as a guide for the rotary motion of the working jaw (3a), having arranged in a medium area of the internal face (64) protrusions (69) for the side fastening of the fixed jaw (3b) having a height substantially equal to the thickness thereof, and at least a hole in an area between the said protrusions (69) for a screw (70) fastening the fixed jaw (3b) and a recess (61) being arranged in an area of the arm (60) adjacent to the coupling portion (57) which provides at least part of the said space for the conical pinion (10), where the said sector of crown wheel (9) is interlocked.

14. Scissor, according to claim 12, **characterized in that** the power drive part (6a) comprises a substantially circular portion leaning against the external face of the working jaw (3a) and crossed by its central area by the said axis (7) at least one hole (73) being located in the said power drive part (6a) facing a corresponding hole of the working jaw (3a) for housing within them at least a driving pin (74).

15. Scissor, according to claim 12, **characterized in that** the said axis (7) which consecutively crosses the power drive part (6a), the working and fixed jaws (3a and 3b) and the arm (60) of the support (5) comprises: at one end, a head (75) wide and flat, which traps a radial bearing (14) housed in an offset of an external face of the power drive part (6a); in a medium area , a cylindric section (83) on which the assembly of power drive part (6a) and working jaw (3a) rotate and working jaw (3a) and which positions the fixed jaw (3b); and on the opposite end, a threaded area (76) which is fixed to a nut (77) which remains embedded in an end face of the arm (60) of the support (5), an axial bearing (13) being arranged between the working and the fixed jaws (3a and 3b) housed in an offset of the fixed jaw (3b).

16. Scissor, according to claim 15, **characterized in that** it includes an annular sealing element (33) such as an O-ring, trapped between the working and the fixed jaws (3a and 3b) surrounding the said axial bearing (13).

17. Scissor, according to claim 12, **characterized in that** a passing area (66) of the coupling portion (57) defines an external seat for a radial bearing (30) which is internally seated on an area of a hub of the conical pinion (10).

18. Scissor, according to claim 2 or 12, **characterized in that** the spin axis of the power drive part(s) (6a, 6b) joins the spin axis (7) of the pinion (10) and **in that** the said predetermined angle is a straight angle.

19. Scissor, according to claim 2 or 12 **characterized in that** the gear between the pinion (10) and the said sector(s) of gear wheel (9a, 9b) is an external conical gear of axis crossing in straight angle so that the diameter of the pinion (10) is no added to the radius of the sector(s) of gear wheel (9a, 9b) lengthwise the scissor.

20. Scissor, according to claim 2 or 12, **characterized in that** the lever arm(s) (8a, 8b) protrude from the power drive part(s) (6a, 6b) on a side substantially opposite to the said cutting mouth (44) with relation to the axis (7).

21. Scissor, according to claim 2 or 12, **characterized in that** it comprises a housing (46) fixed on the support (5) which incorporates the said handle (48) and the said controlling means (49, 50) which include at least a push-button (49) for driving the said motor (43) for driving the said closing-opening motion and at least a control (50) associated to a safety device.

22. Scissor, according to claim 2 or 12, **characterized in that** it includes a sensor of end of the stroke, such as a Hall effect sensor, which makes a switch-off of the current feeding the motor (43) during a predetermined period of time before the power drive part (s) (6a, 6b) and respective jaw(s) (3a, 3b) reach their mechanical end of stroke as a precaution for the displacements which occur thereafter by inertia during the transitory motions for stopping.

23. Scissor, according to claim 2 or 12, **characterized in that** it includes an overload electronic control which, when detecting an intensity of current higher than a preestablished threshold stops the closing-opening cycle of the working jaw (3a) and takes it back to an open position.

24. Scissor, according to claim 2 or 12, **characterized in that** the jaws (3a, 3b) are two cutting sheets (3a, 3b) or respectively, a cutting sheet (3a) and a dolly (3b) or vice versa.

25. Scissor, according to claim 2 or 12, **characterized in that** the two jaws (3a, 3b) have respective concave edges (28a, 28b), the concavities of which, in operational arrangement, remain facing each other and during the cutting operation they tends to trap an object to be cut (4) in a position the closest as possible to the axis (7) optimizing thus the scissor lever arms.

26. Scissor, according to claim 2 or 12, **characterized in that** one of the two jaws (3a, 3b) has a dolly surface or a concave edge (29a) while the other has a convex edge (29b), the former showing in an operational arrangement, its concavity facing the convexity of the later.

27. Scissor, according to claim 11 or 12, **characterized in that** the said motor (43) is coupled to a reducer (54) provided with an output end from which protrudes the said axis (11) constituting the power takeoff (42), at the said reducer (54) output end there is a second fastening configuration arranged in the power drive (42) with the shape of an external thread (62) while the said coupling portion (57) of the support (5) is substantially cylindric and comprises a glass-shaped hollow end area (65), within which is arranged the said first fastening configuration having the shape of an internal thread (58) interconnected with the said external thread (62).

28. Scissor, according to claim 14 or 20, **characterized in that** it includes one or several adjusting washers (34) of metallic or synthetic material, having one or several thicknesses, arranged on the bottom of the said offset (32) which houses the axial bearing (13) which, together with determined tightening preload of the axis (7) adjust the closing-opening motion of the working jaw (3a).

## Patentansprüche

1. Tragbare Motorschere mit einer Halterung (5), die mit einem Abtrieb (42) eines Motors (43) in Verbindung steht, einer Schneidöffnung (44) mit zwei Backen (3a, 3b), von denen mindestens eine eine Arbeitsschneidbacke (3a) ist, die am Halter (5) drehbar gelagert und mit dem Ausgang des Abtriebs (42) über einen Getriebeantrieb (47) zur Ausführung einer Öffnungs-Schließungs-Bewegung bezüglich der anderen Backe (3b) verbunden ist, wobei an der Halterung (5) ein Griff (48) vorhanden oder daran befestigt ist, mit damit gekoppelten Steuerungsmitteln (49, 50) für das Werkzeug, **dadurch gekennzeichnet, dass** die mindestens eine Arbeitsschneidbacke (3a) an einem Leistungsantriebsteil (6a) befestigt ist, der um eine auf einer Halterung (5) gelagerte Achse (7) drehbar ist, wobei der Leistungsantriebsteil (6a) mit einem Hebelarm (8a) versehen ist, an dessen Ende ein Segment eines Kranzrads (9a) angeordnet ist, das in ein Ritzel (10) eingreift, das mit einer Achse (11) des Abtriebs (42) verbunden ist und den Getriebeantrieb (47) darstellt, wobei die Drehachse (7) des Leistungsantriebsteils (6a) mit der Ritzeldrehachse (11) einen vorgegebenen Winkel bildet.

2. Schere nach Anspruch 1, **dadurch gekennzeichnet, dass** beide Backen (3a, 3b) Arbeitsbacken sind und jeweils an einem entsprechenden Leistungsantriebsteil (6a, 6b) in einer beiden Leistungsantriebsteilen (6a, 6b) gemeinsamen Gelenkbefestigung bezüglich der Achse (7) befestigt sind, wobei die Leistungsantriebsteile (6a, 6b) jeweils einen der Hebelarme (8a, 8b) mit einem entsprechenden Segment des Kranzrads (9a, 9b) aufweisen, das in zu dem Ritzel diametral gegenüberliegende Bereiche eingreift, so dass bei Drehen des Ritzels (10) beide Leistungsantriebsteile (6a, 6b) und die jeweiligen Backen (3a, 3b) sich um denselben Winkel in entgegengesetzter Richtung bezüglich der Achse (7) drehen, wobei sie jeweils den halben Verfahrweg der Öffnungs-Schließungs-Bewegung zurücklegen.

3. Schere nach Anspruch 2, **dadurch gekennzeichnet, dass** sie Verankerungsmittel zur Befestigung der jeweiligen Backe (3a, 3b) an dem entsprechenden Leistungsantriebsteil (6a, 6b) aufweist.

4. Schere nach Anspruch 3, **dadurch gekennzeichnet, dass** sowohl die Leistungsantriebsteile (6a, 6b) als auch die Backen (3a, 3b) jeweils koaxial zueinander verlaufende Durchgangsbohrungen (1, 2) für die Achse (7) aufweisen und die Verankerungsmittel zusätzlich zu den Durchgangsbohrungen (1, 2) für die Achse (7) mindestens einen Verankerungspunkt umfassen.

5. Schere nach Anspruch 4, **dadurch gekennzeichnet, dass** sie drei Verankerungspunkte aufweist, die um die Durchgangsbohrungen (1, 2) für die Achse (7) winkelförmig verteilt sind.

6. Schere nach Anspruch 5, **dadurch gekennzeichnet, dass** die Verankerungspunkte jeweils eine durch die jeweiligen, zueinander koaxialen Bohrungen (36,37) des Leistungsantriebsteil (6a, 6b) und der Backen (3a, 3b) geführte, außen zylinderförmige Zentrierbuchse (24) aufweisen, wobei die Zentrierbuchse (24) mit einem Kopf (26) versehen ist, der in einem äußeren Vorsprung der Backen (3a, 3b) und einer mittigen Gewindebohrung (26) lagert, in die eine Schraube (21) mit einem Kopf (27) eingeschraubt ist, die in einem äußeren Vorsprung des Leistungsantriebsteil (6a, 6b) lagert, ohne über dessen Außenfläche hinauszuragen.

7. Schere nach Anspruch 2, **dadurch gekennzeichnet, dass** von einem Ende der Halterung (5) an der Vorderseite eine Gabel (12) zur Stützung der Drehachse (7) der Leistungsantriebsteile (6a, 6b) und der jeweiligen Backen (3a, 3b) hervorsteht, wobei die Gabel (12) zwei Arme aufweist, die auf Seiten angeordnet sind, die dem sie enthaltenden Ritzel (10) diametral gegenüberliegen, während die Achse (11), auf der das Ritzel (10) montiert ist, von einem Lager (31) getragen wird, das in einem Vorsprung (30) der Halterung (5) untergebracht ist.

8. Schere nach Anspruch 7, **dadurch gekennzeichnet, dass** durch beide Arme der Gabel (12) beide Leistungsantriebsteile (6a, 6b) begrenzt werden, wobei die jeweiligen Backen (3a, 3b) daran befestigt sind, wobei die Backen (3a, 3b) aneinander anliegen und dadurch ein Achslager (13) abdecken, das in mindestens einem Vorsprung (32), der in mindestens einer der Backen (3a, 3b) vorhanden ist, untergebracht ist, und axial auf ein Ringelement (33) drücken, durch das die Umfangsflächen der Vorsprünge abgedichtet werden.

9. Schere nach Anspruch 8, **dadurch gekennzeichnet, dass** sie entsprechende Radiallager (14) aufweist, die in Vorsprüngen (38) der Außenflächen der Leistungsantriebsteile (6a, 6b) untergebracht sind, wobei die Lager durch O-Ringe (35) geschützt sind, auf die axial von Abdeckungen oder Enden der Gabelarme (12) gedrückt wird, in denen sich die Bohrungen (20) für die durch den Gesamtaufbau verlaufende Achse (7) befinden.

10. Schere nach Anspruch 8, **dadurch gekennzeichnet, dass** die Achse (7) eine Buchse (15) mit einem Kopf (16) und einer zylinderförmigen Außenfläche aufweist, an die im Innern die Bohrungen (20) der Gabelarme (12), der Achslager (14) und einer Gewindebohrung (17) angepasst sind, deren Kopf (16) in Arbeitsstellung an der Außenfläche einer der Gabelarme (12) anliegt, während der Kopf (18) einer in die Zentrierbohrung (17) eingeschraubten Schraube (19) an der Außenfläche des anderen Gabelarms (12) anliegt.

11. Schere nach Anspruch 7, **dadurch gekennzeichnet, dass** die Halterung (5) in einem der Gabel (12) gegenüberliegenden Bereich einen Kupplungsabschnitt (57) mit einer ersten Befestigungsanordnung (58) zur Verbindung mit einer zweiten im Abtrieb (42) angeordneten zweiten Befestigungsanordnung (62) aufweist.

12. Schere nach Anspruch 1, **dadurch gekennzeichnet, dass** nur eine Backe (3a) eine Arbeitsbacke ist, während die andere Backe (3b) an der einstückigen Halterung (5) befestigt ist, die einen Kupplungsabschnitt (57) mit einer ersten Befestigungsanordnung (58) zur Verbindung mit einer zweiten im Abtrieb (42) angeordneten zweiten Befestigungsanordnung (62) und einen nach vorne verlängerten Seitenarm (60) aufweist, an deren Innenfläche (64) die Festbacke (3b) befestigt und daneben die Arbeitsbacke (3a) montiert ist, und durch den Kupplungsabschnitt (57) hindurch ein Durchgang (66) vorhanden ist, damit das Ritzel (10) sich in einen Raum bewegen kann, der vor einer Fläche liegt, von der aus der Arm (80) beginnt und wo das konische Ritzel (10) in das in die Arbeitsbacke (3a) integrierte Kranzradsegment (9a) eingreift.

13. Schere nach Anspruch 12, **dadurch gekennzeichnet, dass** die Innenfläche (60) einen ebenen Endbereich mit kreisförmigem Umriss aufweist, in dessen Mittelpunkt sich ein Befestigungsloch (67) für eine Achse (7) befindet, die durch die feste Backe (3b) führt und als Führung für die Drehbewegung der Arbeitsbacke (3a) dient, wobei im Mittelbereich der Innenfläche (64) Vorsprünge (69) für die seitliche Befestigung der festen Backe (3b) mit einer Höhe im wesentlichen gleich der Dicke sowie mindestens ein Loch in einem Bereich zwischen den Vorsprüngen (69) für eine Schraube (70), mit der die feste Backe (3b) befestigt wird, und eine Aussparung (61) vorhanden sind, die in einem Bereich des Arms (60) neben dem Kupplungsabschnitt (57) angeordnet ist, der zumindest einen Teil des Raums für das konische Ritzel (10) bereitstellt, in dem das Kranzradsegment (9) eingreift.

14. Schere nach Anspruch 12, **dadurch gekennzeichnet, dass** der Leistungsantriebsteil (6a) einen im wesentlichen kreisförmigen Abschnitt aufweist, der an der Außenfläche der Arbeitsbacke (3a) anliegt und durch dessen Mittelbereich die Achse (7) verläuft, wobei mindestens ein Loch (73) im Leistungsantriebteil (6a) gegenüber einem entsprechenden Loch der Arbeitsbacke (3a) zur Aufnahme mindestens eines Mitnehmerstifts (74) vorhanden ist.

15. Schere nach Anspruch 12, **dadurch gekennzeichnet, dass** die Achse (7), die nacheinander durch den Leistungsantriebsteil (6a), die Arbeits- und Festbacke (3a und 3b) und den Arm (60) der Halterung (5) verläuft, folgendes umfasst: an einem Ende einen breiten und ebenen Kopf (75), der ein in einem Vorsprung einer Außenfläche des Leistungsantriebsteils (6a) untergebrachtes Axiallager (14) abdeckt; in einem Mittelbereich einen zylinderförmigen Abschnitt (83), auf dem sich der Aufbau aus Leistungsantriebsteil (6a) und Arbeitsbacke (3a) dreht und der die Festbacke (3b) positioniert; und am gegenüberliegenden Ende einen Gewindebereich (76), der an einem Bolzen (77) befestigt ist, der in eine Endfläche des Arms (60) der Halterung (5) eingelassen ist, wobei zwischen der in einem Vorsprung der Festbacke (3b) untergebrachten Arbeits- und Festbacke (3a und 3b) ein Axiallager (13) angeordnet ist.

16. Schere nach Anspruch 15, **dadurch gekennzeichnet, dass** sie ein ringförmiges Dichtelement (33), wie z.B. einen O-Ring, aufweist, das zwischen der das Axiallager (13) umgebenden Arbeits- und Festbacke (3a und 3b) fest angeordnet ist.

17. Schere nach Anspruch 12, **dadurch gekennzeichnet, dass** ein Passierbereich (66) des Kupplungsabschnitts (57) einen externen Sitz für das Axiallager (30) definiert, das im Innern auf einem Bereich einer Nabe des konischen Ritzels (10) sitzt.

18. Schere nach Anspruch 2 oder 12, **dadurch gekennzeichnet, dass** die Drehachse des (der) Leistungsantriebsteils (-teile) (6a, 6b) mit der Drehachse (7) des Ritzels (10) verbunden ist und dass der vorgegebene Winkel ein gestreckter Winkel ist.

19. Schere nach Anspruch 2 oder 12, **dadurch gekennzeichnet, dass** es sich bei dem Getriebe zwischen dem Ritzel (10) und dem (den) Abschnitt(en) des Getrieberads (9a, 9b) um ein Kegelgetriebe einer Achse handelt, die in einem gestreckten Winkel verläuft, so dass der Durchmesser des Ritzels (10) sich nicht zum Radius des (der) Abschnitts (Abschnitte) des Getrieberads (9a, 9b) in Längsrichtung der Schere addiert.

20. Schere nach Anspruch 2 oder 12, **dadurch gekennzeichnet, dass** der (die) Hebelarm(e) (8a, 8b) am (an den) Leistungsantriebsteil(en) (6a, 6b) auf einer Seite, die im wesentlichen der Schnittöffnung (44) bezüglich der Achse (7) gegenüberliegt, hervorstehen.

21. Schere nach Anspruch 2 oder 12, **dadurch gekennzeichnet, dass** sie ein Gehäuse (46) aufweist, das an der Halterung (5) befestigt ist, in der der Griff (48) und die Steuerungsmittel (49, 50) vorhanden sind, die mindestens einen Druckknopf (49) zum Antrieb des Motors (43), durch den die Öffnungs-Schließungs-Bewegung angetrieben wird, und mindestens eine mit einer Sicherheitsvorrichtung verbundene Bedienung (50) aufweisen.

22. Schere nach Anspruch 2 oder 12, **dadurch gekennzeichnet, dass** sie einen Sensor für das Hubende, wie z.B. einen Halleffekt-Sensor, aufweist, der den Versorgungsstrom des Motors (43) während eines vorgegebenen Zeitraums, bevor der (die) Leistungsantriebsteil (e) (6a, 6b) und entsprechende(n) Backe(n) (3a, 3b) ihr mechanisches Hubende erreichen, als Vorsichtsmaßnahme für die danach stattfindenden trägheitsbedingten Bewegungen während der Momentanbewegungen beim Anhalten abschaltet.

23. Schere nach Anspruch 2 oder 12, **dadurch gekennzeichnet, dass** sie einen elektronischen Überlastregler aufweist, der bei Erkennen einer höheren Stromstärke als der einem vorgegebenen Schwellenwert entsprechenden den Öffnungs-Schließungs-Zyklus der Arbeitsbacke (3a) anhält und sie wieder in die geöffnete Position bringt.

24. Schere nach Anspruch 2 oder 12, **dadurch gekennzeichnet, dass** es sich bei den Backen (3a, 3b) um zwei Schneiden (3a, 3b) bzw. um eine Schneide (3a) und einen Gegenhalter (3b) bzw. umgekehrt handelt.

25. Schere nach Anspruch 2 oder 12, **dadurch gekennzeichnet, dass** die zwei Backen (3a, 3b) jeweils konkave Schneiden (28a, 28b) aufweisen, deren Konkavitäten bei Arbeitsanordnung stets einander gegenüber liegen und während des Schneidvorgangs dazu neigen, einen zu schneidenden Gegenstand (4) in einer Position zu fixieren, die möglichst nahe an der Achse (7) liegt, wodurch die Hebelarme der Schere optimiert werden.

26. Schere nach Anspruch 2 oder 12, **dadurch gekennzeichnet, dass** eine der zwei Backen (3a, 3b) eine Gegenhalterfläche oder eine konkave Schneide (29a) aufweist, während die andere eine konvexe Schneide (29b) aufweist, wobei die Konkavität der ersteren bei Arbeitsandordnung der Konvexität der letzteren gegenüber liegt.

27. Schere nach Anspruch 11 oder 12, **dadurch gekennzeichnet, dass** der Motor (43) an ein Reduzierstück (54) mit einem Ausgangsende gekoppelt ist, an dem die den Abtrieb (42) darstellende Achse (11) hervorsteht, wobei an dem Ausgangsende des Reduzierstücks (54) eine zweite Befestigungsanordnung im Leistungsantrieb (42) in Form eines Außengewindes (62) vorliegt, während der Kupplungsabschnitt (57) der Halterung (5) im wesentlichen zylinderförmig ist und einen glasförmigen hohlen Endbereich (65) aufweist, in dem die erste Befestigungsanordnung in Form eines mit dem Außengewinde (62) verbundenen Innengewindes (58) angeordnet ist.

28. Schere nach Anspruch 14 oder 20, **dadurch gekennzeichnet, dass** sie eine oder mehrere Passscheiben (34) aus metallischem oder synthetischem Material mit einer oder mehreren Stärken aufweist, die am Boden des Vorsprungs (32) angeordnet sind, in dem das Axiallager (13) untergebracht ist, durch die zusammen mit der bestimmten Vorspannlast der Achse (7) die Öffnungs-Schließungs-Bewegung der Arbeitsbacke (3a) eingestellt wird.

## Revendications

1. Ciseaux portables actionnés par un moteur du genre comprenant un support (5) relié à une prise de courant (42) d'un moteur (43), une ouverture de coupe (44) comprenant deux mâchoires (3a, 3b), dont une au moins est une mâchoire tranchante de travail (3a) montée tournante sur ce support (5) et branchée à la sortie de cette prise de courant (42) au moyen d'une commande à roue dentée (47) pour effectuer un mouvement de fermeture-ouverture par rapport à l'autre mâchoire (3b), ce support (5) comporte ou possède fixée, une poignée (48) à laquelle sont associés des moyens pour contrôler (49, 50) l'outil, **caractérisés en ce que** cette mâchoire de travail (3a) qui est au moins une, est fixée à une pièce pour la commande mécanique (6a) qui peut tourner autour d'un axe (7) monté sur un support (5), cette pièce de commande mécanique (6a) comporte un bras de levier (8a) à l'extrémité duquel est agencé un secteur de couronne d'entraînement (9a) qui s'enclenche avec un pignon (10) uni à un axe (11) de cette prise de courant (42) constituant cette commande mécanique (47) où cet axe de rotation (7) de la pièce de commande mécanique (6a) forme un certain angle par rapport à cet axe de rotation du pignon (11).

2. Ciseaux, conformément à la revendication 1, **caractérisés en ce que** les deux mâchoires (3a, 3b) sont des mâchoires de travail et chacune d'elles est fixée à une pièce de commande mécanique respective (6a, 6b) articulée par rapport à l'axe (7), qui est commun pour les deux pièces de commande mécanique (6a, 6b) chacune des pièces de commande mécanique (6a, 6b) comprenant un de ces bras de levier (8a, 8b) avec un secteur de couronne d'entraînement respectif (9a, 9b) qui s'enclenche avec des zones diamétralement opposées à ce pignon, de sorte que lorsqu'on fait tourner ce pignon (10), aussi bien les pièces de commande mécanique (6a, 6b) que les mâchoires respectives (3a, 3b) tournent en un même angle dans des sens différents par rapport à cet axe (7), chacune parcourant la moitié du trajet de ce mouvement de fermeture-ouverture.

3. Ciseaux, conformément à la revendication 2, **caractérisés en ce qu'**ils comprennent des moyens d'ancrage pour fixer chaque mâchoire (3a, 3b) à la pièce de commande mécanique respective (6a, 6b).

4. Ciseaux, conformément à la revendication 3, **caractérisés en ce que**, aussi bien les pièces de commande mécanique (6a, 6b) que les mâchoires (3a, 3b), comprennent des trous de passage respectifs (1,2) coaxiaux entr'eux, pour l'axe (7) et ces moyens d'ancrage comprennent au moins un point d'ancrage en plus de ces trous de passage (1, 2) pour l'axe (7).

5. Ciseaux, conformément à la revendication 4, **caractérisés en ce qu'**ils comprennent trois de ces points d'ancrage distribués en angle autour de ces trous de passage (1, 2) pour l'axe (7).

6. Ciseaux, conformément à la revendication 5, **caractérisés en ce que** chacun de ces points d'ancrage comprend une douille (24) de centrage cylindrique à l'extérieur, passée à travers les trous respectifs (36, 37), coaxiaux entr'eux, de la pièce de commande mécanique (6a, 6b) et la mâchoire (3a, 3b), cette douille de centrage (24) étant pourvue d'une tête (25) qui est logée dans un évidement externe de la mâchoire (3a, 3b) et un trou ayant un taraudage central (26) dans lequel est vissée une vis (21) pourvue d'une tête (27), qui reste logée dans un évidement externe de la pièce de commande mécanique (6a, 6b) sans en dépasser la surface externe.

7. Ciseaux, conformément à la revendication 2, **caractérisés en ce qu'**une fourche (12) dépasse à l'avant ce support (5) pour servir de support à l'axe de rotation (7) des pièces de commande mécanique (6a, 6b) y des mâchoires respectives (3a, 3b), cette fourche (12) comprenant deux bras situés sur les côtés diamétralement opposés au pignon (10) qui le comprend tandis que l'axe (11) sur lequel est monté le pignon (10) est supporté par un coussinet (31) logé dans un évidement (30) du support (5).

8. Ciseaux, conformément à la revendication 7, **caractérisés en ce que**, entre les deux bras de la fourche (12) sont enfermées les deux pièces de commande mécanique (6a, 6b) avec des mâchoires respectives (3a, 3b) fixées sur elles, ces mâchoires (3a,3b) s'appuyant l'une sur l'autre, en emprisonnant un coussinet axial (13) logé dans au moins un évidement (32) existant sur au moins une des mâchoires (3a, 3b) et comprimant axialement un élément annulaire (33) qui ferme le périmètre de ces évidements.

9. Ciseaux, conformément à la revendication 8, **caractérisés en ce qu'**ils comprennent des coussinets radiaux respectifs (14) logés dans des évidements (38) des faces externes des pièces de commande mécanique (6a, 6b), ces coussinets étant protégés par des joints toriques (35) axialement comprimés par des couvercles ou par des extrémités des bras de fourche (12) où se trouvent les trous (20) pour l'axe (7) qui traverse tout l'ensemble.

10. Ciseaux, conformément à la revendication 8, **caractérisés en ce que** cet axe (7) comprend une douille (15) pourvue d'une tête (16) et d'une surface cylindrique externe sur laquelle sont ajustés à l'intérieur ces trous (20) des bras de la fourche (12) et les coussinets radiaux (14) et un trou central taraudé (17), dont la tête (16) en position de fonctionnement est stoppée par la face externe d'un des bras de la fourche (12), tandis qu'une tête (18) d'une vis (19) vissée dans ce trou central (17) bute contre la face externe de l'autre bras de fourche (12).

11. Ciseaux, conformément à la revendication 7, **caractérisés en ce que** ce support (5) comprend dans une zone opposée à cette fourche (12) une portion de liaison (57) pourvue d'un premier moyen de fixation (58) pour relier à un deuxième moyen de fixation (62) agencé dans la prise de courant (42).

12. Ciseaux, conformément à la revendication 1, **caractérisés en ce que** seulement une mâchoire (3a) est une mâchoire de travail tandis que l'autre mâchoire (3b) est fixe sur ce support (5) qui est d'une seule pièce et comprend une portion de liaison (57) pourvue d'un premier moyen de fixation (58) pour relier à une deuxième moyen de fixation (62) agencé dans la prise de courant (42) et un bras latéral étendu vers l'avant (60), sur une face interne (64) sur laquelle est rattachée la mâchoire fixe (3b) et adjacente à celle-ci est montée la mâchoire de travail (3a) et il existe un passage (66) à travers cette portion de liaison (57) pour le passage de ce pignon conique (10) à un espace pourvu sur la partie frontale d'une zone de laquelle part ce bras (80) où le pignon conique (10) s'enclenche avec ce secteur de couronne d'entraînement (9a) solidaire avec la mâchoire de travail (3a).

13. Ciseaux, conformément à la revendication 12, **caractérisés en ce que** cette face interne (60) possède une zone d'extrémité plate ayant un pourtour circulaire, au centre de laquelle se trouve un trou de montage (67) d'un axe (7) qui passe à travers la mâchoire fixe (3b) et agit comme guide pour le mouvement tournant de la mâchoire de travail (3a) , ayant sur une zone du milieu de la face interne (64) des bosses (69) agencées pour la fixation latérale de la mâchoire fixe (3b) qui a une hauteur sensiblement égale à la grosseur de celle-ci, et au moins un trou dans une zone entre ces bosses (69) pour une vis (70) qui fixe la mâchoire fixe (3b) et un creux (61) étant agencé sur une zone du bras (60) adjacent à la portion de liaison (57) qui fournit au moins une partie de cet espace pour le pignon conique (10) où ce secteur de la couronne (9) est enclenché.

14. Ciseaux, conformément à la revendication 12, **caractérisés en ce que** la pièce de commande mécanique (6a) comprend une portion sensiblement circulaire qui s'appuie contre la face externe de la mâchoire de travail (3a) et qui traverse par sa zone centrale à cet axe (7) au moins un trou (73) situé dans cette pièce de commande mécanique (6a) faisant face à un trou correspondant de la mâchoire de travail (3a) pour y loger au moins une broche d'entraînement (74).

15. Ciseaux, conformément à la revendication 12, **caractérisés en ce que** cet axe (7) qui traverse consécutivement la pièce de commande mécanique (6a), les mâchoires de travail et fixe (3a et 3b) et le bras (60) du support (5) comprend: à une extrémité, une tête (75) large et plane, qui emprisonne un coussinet radial (14) logé dans un évidement d'une face externe de la pièce de commande mécanique (6a); dans une zone du milieu, une section cylindrique (83) sur laquelle tourne l'ensemble de la pièce de commande mécanique (6a) et la mâchoire de travail (3a) et qui positionne la mâchoire fixe (3b); et à l'extrémité opposée, une zone taraudée (76) qui est fixée à un écrou (77) qui reste emboîté dans une face d'extrémité du bras (60) du support (5), un coussinet axial (13) étant agencé entre la mâchoire de travail et la fixe (3 a et 3b) logés dans un évidement de la mâchoire fixe (3b).

16. Ciseaux, conformément à la revendication 15, **caractérisés en ce qu'**ils comprennent un élément annulaire (33) pour sceller, tel qu'un joint torique, emprisonné entre la mâchoire de travail et la fixe (3a et 3b) entourant ce coussinet axial (13).

17. Ciseaux, conformément à la revendication 12, **caractérisés en ce qu'**une zone de passage (66) de la portion de liaison (57) définit une assise externe pour un coussinet radial (30) qui se trouve à l'intérieur sur une zone d'un moyeu du pignon conique (10).

18. Ciseaux, conformément à la revendication 2 ou 12, **caractérisés en ce que** l'axe de rotation de la(des) pièces de commande mécanique (6a, 6b) unit l'axe de rotation (7) du pignon (10) et **en ce que** cet angle prédéterminé est un angle droit.

19. Ciseaux, conformément à la revendication 2 ou 12, **caractérisés en ce que** l'engrenage entre le pignon (10) et ce(ces) secteur(s) de la couronne d'entraînement (9a, 9b) est un engrenage conique externe ayant un axe qui le traverse à angle droit de sorte que le diamètre du pignon (10) ne sera pas ajouté au rayon du (des) secteur(s) de la couronne d'entraînement (9a, 9b) le long des ciseaux.

20. Ciseaux, conformément à la revendication 2 ou 12, **caractérisés en ce que** le(les) bras du levier (8a, 8b) dépasse(nt) la(les) pièce(s) d'entraînement mécanique (6a, 6b) sur un côté de la commande mécanique sensiblement opposée à cette ouverture de coupe (44) par rapport à l'axe (7).

21. Ciseaux, conformément à la revendication 2 ou 12, **caractérisés en ce qu'**ils comprennent un bâti (46) fixé sur le support (5) qui incorpore cette poignée (48) et ces moyens de contrôle (49, 50) qui comprennent au moins un poussoir (49) pour entraîner ce moteur (43) pour entraîner ce mouvement de fermeture-ouverture et au moins un contrôle (50) associé à un dispositif de sûreté.

22. Ciseaux, conformément à la revendication 2 ou 12, **caractérisés en ce qu'**ils comprennent un capteur de fin de parcours, tel qu'un capteur d'effet Hall, qui coupe le courant d'alimentation du moteur (43) pendant une durée prédéterminée, avant que la(les) pièce(s) d'entraînement mécanique (6a, 6b) et la(les) mâchoire(s) respective(s) (3a, 3b) n'arrive(nt) à la fin du parcours mécanique comme mesure de précaution pour les déplacements qui ont lieu ensuite à cause de l'inertie durant les mouvements transitoires pour s'arrêter.

23. Ciseaux, conformément à la revendication 2 ou 12, **caractérisés en ce qu'**ils comprennent un contrôle électronique de surcharge qui, lorsqu'il détecte une intensité de courant supérieure à celle d'un seuil préalablement établi arrête le cycle de fermeture-ouverture de la mâchoire de travail (3a) et la retourne à sa position d'ouverture.

24. Ciseaux, conformément à la revendication 2 ou 12, **caractérisés en ce que** les deux mâchoires (3a, 3b) sont des lames tranchantes (3a, 3b) ou, respectivement, une lame tranchante (3a) et une béquille (3b) ou vice versa.

25. Ciseaux, conformément à la revendication 2 ou 12, **caractérisés en ce que** les deux mâchoires (3a, 3b) ont des bords concaves respectifs (28a, 28b), ces concavités, dans un agencement opérationnel, restent se faisant face et durant l'opération de coupe, elles ont tendance à emprisonner un objet à couper (4) dans une position la plus proche possible de l'axe (7) en optimisant ainsi les bras de levier des ciseaux.

26. Ciseaux, conformément à la revendication 2 ou 12, **caractérisés en ce qu'**une des deux mâchoires (3a, 3b) possède une surface de béquille ou un bord concave (29a) tandis que l'autre possède un bord convexe (29b), le premier ayant un agencement opérationnel, sa concavité faisant face à la convexité du dernier.

27. Ciseaux, conformément à la revendication 11 ou 12, **caractérisés en ce que** ce moteur (43) est relié à un réducteur (54) pourvu d'une extrémité de sortie de laquelle cet axe (11) dépasse en constituant la prise de courant (42), à cette sortie du réducteur (54) il y a un deuxième moyen de fixation agencé dans la prise de courant (42) ayant la forme d'un taraudage externe (62) tandis que la portion de liaison (57) du support (5) est sensiblement cylindrique et comprend une zone d'extrémité creuse ayant la forme d'un verre (65) dans laquelle est agencé ce premier moyen de fixation ayant la forme d'un taraudage interne (58) interconnecté avec ce taraudage externe (62).

28. Ciseaux, conformément à la revendication 14 ou 20, **caractérisés en ce qu'**ils comprennent une ou plusieurs rondelles de réglage (34) en matériau métallique ou synthétique , ayant une ou plusieurs grosseurs, agencées sur le fond de cet évidement (32) qui loge le coussinet axial (13) qui, avec la charge préalable de serrage déterminée de l'axe (7) règle le mouvement de fermeture-ouverture de la mâchoire de travail (3a).
